(19) Europäisches Patentamt
European Patent Office
Office européen des brevets

(11) **EP 3 988 963 B1**

(12) **EUROPEAN PATENT SPECIFICATION**

(45) Date of publication and mention
of the grant of the patent:
**18.06.2025 Bulletin 2025/25**

(51) International Patent Classification (IPC):
***G01S 17/931*** (2020.01)     ***G01S 7/484*** (2006.01)
***G01S 7/497*** (2006.01)

(21) Application number: **21198555.1**

(52) Cooperative Patent Classification (CPC):
**G01S 17/931; G01S 7/484; G01S 7/497**

(22) Date of filing: **23.09.2021**

(54) **OPTICAL SYSTEMS AND METHODS FOR CONTROLLING THEREOF**

OPTISCHE SYSTEME UND VERFAHREN ZU DEREN STEUERUNG

SYSTÈMES OPTIQUES ET LEURS PROCÉDÉS DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2020 RU 2020135016**

(43) Date of publication of application:
**27.04.2022 Bulletin 2022/17**

(73) Proprietor: **Y. E. Hub Armenia LLC**
**0002 Yerevan (AM)**

(72) Inventors:
• **SOLOMENTSEV, Dmitry Valentinovich**
**127549 Moscow (RU)**
• **GOLIKOV, Andrey Victorovich**
**124536 Moscow (RU)**
• **ORLOV, Nikolay Evgenevich**
**427967 Udmurtskaya Resp (RU)**
• **KUZNETSOV, Vladimir Albertovich**
**121614 Moscow (RU)**

(74) Representative: **Pribic, Jelena**
**MSA IP - Milojevic, Sekulic & Associates**
**Karadjordjeva 65**
**11000 Beograd (RS)**

(56) References cited:
**US-A1- 2016 274 589    US-A1- 2017 269 197
US-A1- 2020 319 304**

## Description

### TECHNICAL FIELD

The present technology relates generally to Light Detection and Ranging (LiDAR) systems; and in particular, to methods and systems for selectively scanning objects in regions of interest thereof.

### BACKGROUND

LiDAR systems (Light Detection and Ranging systems, also referred to as LIDAR or Lidar systems) are widely used in self-driving (autonomous) vehicles. LiDAR systems allow measurement of distances between the system and surrounding objects by irradiating the surroundings with light and collecting light reflected from one or more objects in the surroundings.

In a typical time of flight (ToF) LiDAR system, a light source emits a plurality of pulsed narrow laser beams across a field of view. Light reflected and/or scattered from an object in the field of view is received by a detection unit of the LiDAR system to determine a position of the object. For ToF systems, time between (i) emission of the light beam and (ii) detection of the scattered light beam is measured to determine the distance to the object.

The reflected beams received by the LiDAR are processed to generate data points using a central computer, each pulse of the beam mapping to one data point in a point cloud representing the surrounding environment as a 3D map. As the 3D map is more or less detailed and accurate depending on the density or refresh rate of the point cloud, generally speaking, the greater the sampling rate over the field of view, the more detailed and accurate is the 3D map.

The frequency of pulses emitted by the LiDAR system, and thus the number of points, is however generally limited by several factors. For some LiDAR laser sources, for example, there can be a limit to the emission frequency (maximum pulse frequency) beyond which the laser source can experience a power slump. In such a case, the light pulses emitted by the laser have less power and therefore the received reflected light correspondingly have lower power. For objects that reflect weakly, for example, lower power laser pulses may not be sufficient to have an adequate signal to create the 3D map.

United States Patent Publication No. 2016/0274589A1, published 22 September 2016, discloses a system and method including scanning a light detection and ranging (LIDAR) device through a range of orientations corresponding to a scanning zone while emitting light pulses from the LIDAR device. The method also includes receiving returning light pulses corresponding to the light pulses emitted from the LIDAR device and determining initial point cloud data based on time delays between emitting the light pulses and receiving the corresponding returning light pulses and the orientations of the LIDAR device. The method includes identifying, based on the initial point cloud data, a reflective feature in the scanning zone and determining an enhancement region and an enhanced angular resolution for a subsequent scan to provide a higher spatial resolution in at least a portion of subsequent point cloud data from the subsequent scan corresponding to the reflective feature.

United States Patent Publication No. 2020/0319304A1, published 8 October 2020, discloses a laser system including a seed laser configured to produce a sequence of seed light pulses, wherein the sequence of seed light pulses are produced with variable time intervals in a sweep cycle; a pump laser configured to produce pump light having variable amplitude in the sweep cycle; and a control unit configured to generate a command to the pump laser to synchronize the pump light with the sequence of seed light pulses.

United States Patent Publication No. 2017/0269197A1, published 21 September 2017, discloses methods and systems for performing three-dimensional LIDAR measurements with different illumination intensity patterns. Repetitive sequences of measurement pulses each having different illumination intensity patterns are emitted from a LIDAR system. One or more pulses of each repetitive sequence have a different illumination intensity than another pulse within the sequence. The illumination intensity patterns are varied to reduce total energy consumption and heat generated by the LIDAR system. In some examples, the illumination intensity pattern is varied based on the orientation of the LIDAR device. In some examples, the illumination intensity pattern is varied based on the distance between a detected object and the LIDAR device.

Therefore, there is a need for systems and methods which avoid, reduce or overcome the limitations of the prior art.

### SUMMARY

The inventors of the present technology have recognized certain solutions for avoiding, reducing, and/or overcoming at least come limitations of the prior art.

In accordance with a broad aspect of the present technology, there is proposed a time-of-flight LiDAR system with several scanning modes for optimizing scanning frequency or density of the objects producing strong signals. According to non-limiting embodiments or implementations of the present technology, the LiDAR system includes a light source composed of a laser source coupled to a fiber amplifier. In some cases, the fiber amplifier is a doped fiber amplifier, and in some cases an erbium doped fiber amplifier (EDFA). For the case of a LiDAR system implementing the EDFA, for example, pulses emitted by the laser source are amplified by excited erbium ions in the fiber core. After the resulting laser beam pulse is emitted from the LiDAR system, some time is required to re-charge the light source, the time being determined by a population inversion rate in the doped fiber amplifier. As such, at a pulse frequency (*i.e.* the rate at which the pulses are emitted) that is faster than the recharge (population inversion) rate, the pulses emitted from the light source experience a power slump due to incomplete recharge of the amplifier.

In accordance to the non-limiting embodiments of the present technology, the signal-to-noise ratio (SNR) is determined, for one or more regions of the field of view of the system, and compared to a pre-determined signal-to-noise threshold in order to control the LiDAR system in one of a plurality of scanning modes. For regions of the field of view that have SNRs above the threshold, the pulse frequency of an output beam can be increased in order to produce a more spatially detailed (or more quickly refreshed) 3D map of that region. By the present technology, the pulse frequency can be increased beyond the population inversion rate of the doped fiber amplifier when the SNR is above the threshold. As such, the identified region is more frequently sampled, albeit with a lower power light pulse due to the emission before the amplifier has completed population inversion. As the lower power light pulse is directed only to regions with sufficiently high SNR at the original power, these regions are expected to still produce adequate signal quality at the lower power. Correspondingly, regions with signal-to-noise ratios not surpassing the threshold are not sampled at the faster rate in order to avoid inadequate reflected signal strength due to the light pulse power slump. In this way, spatial detail and signal strength can be balanced.

The object of the invention is solved by a method for controlling an optical system according to claim 1 and a LIDAR system of claim 7. Preferred embodiments are present in dependent claims.

In the context of the present specification, the term "light source" broadly refers to any device configured to emit radiation such as a radiation signal in the form of a beam, for example, without limitation, a light beam including radiation of one or more respective wavelengths within the electromagnetic spectrum. In one example, the light source can be a "laser source". Thus, the light source could include a laser such as a solid-state laser, laser diode, a high-power laser, or an alternative light source such as, a light emitting diode (LED)-based light source. Some (non-limiting) examples of the laser source include: a Fabry-Perot laser diode, a quantum well laser, a distributed Bragg reflector (DBR) laser, a distributed feedback (DFB) laser, a fiber-laser, or a vertical-cavity surface-emitting laser (VCSEL). In addition, the laser source may emit light beams in differing formats, such as light pulses, continuous wave (CW), quasi-CW, and so on. In some non-limiting examples, the laser source may include a laser diode configured to emit light at a wavelength between about 650 nm and 1150 nm. Alternatively, the light source may include a laser diode configured to emit light beams at a wavelength between about 800 nm and about 1000 nm, between about 850 nm and about 950 nm, between about 1300 nm and about 1600 nm, or in between any other suitable range. Unless indicated otherwise, the term "about" with regard to a numeric value is defined as a variance of up to 10% with respect to the stated value.

In the context of the present specification, an "output beam" may also be referred to as a radiation beam, such as a light beam, that is generated by the radiation source and is directed downrange towards a region of interest. The output beam may have one or more parameters such as: beam duration, beam angular dispersion, wavelength, instantaneous power, photon density at different distances from light source, average power, beam power intensity, beam width, beam repetition rate, beam sequence, pulse duty cycle, wavelength, or phase etc. The output beam may be unpolarized or randomly polarized, may have no specific or fixed polarization (e.g., the polarization may vary with time), or may have a particular polarization (e.g., linear polarization, elliptical polarization, or circular polarization).

In the context of the present specification, an "input beam" is radiation or light entering the system, generally after having been reflected from one or more objects in the ROI. The "input beam" may also be referred to as a radiation beam or light beam. By reflected is meant that at least a portion of the output beam incident on one or more objects in the ROI, bounces off the one or more objects. The input beam may have one or more parameters such as: time-of-flight (i.e., time from emission until detection), instantaneous power (e.g., power signature), average power across entire return pulse, and photon distribution/signal over return pulse period etc. Depending on the particular usage, some radiation or light collected in the input beam could be from sources other than a reflected output beam. For instance, at least some portion of the input beam could include light-noise from the surrounding environment (including scattered sunlight) or other light sources exterior to the present system.

In the context of the present specification, the term "surroundings" of a given vehicle refers to an area or a volume around the given vehicle including a portion of a current environment thereof accessible for scanning using one or more sensors mounted on the given vehicle, for example, for generating a 3D map of the such surroundings or detecting objects therein.

In the context of the present specification, a "Region of Interest" may broadly include a portion of the observable environment of a LiDAR system in which the one or more objects may be detected. It is noted that the region of interest of the LiDAR system may be affected by various conditions such as but not limited to: an orientation of the LiDAR system (e.g.

direction of an optical axis of the LiDAR system); a position of the LiDAR system with respect to the environment (e.g. distance above ground and adjacent topography and obstacles); operational parameters of the LiDAR system (e.g. emission power, computational settings, defined angles of operation), etc. The ROI of LIDAR system may be defined, for example, by a plane angle or a solid angle. In one example, the ROI may also be defined within a certain distance range (e.g. up to 200 m or so).

In the context of the present specification, a "server" is a computer program that is running on appropriate hardware and is capable of receiving requests (e.g. from electronic devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "electronic device" is any computer hardware that is capable of running software appropriate to the relevant task at hand. In the context of the present specification, the term "electronic device" implies that a device can function as a server for other electronic devices, however it is not required to be the case with respect to the present technology. Thus, some (non-limiting) examples of electronic devices include self-driving unit, personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices.

In the context of the present specification, the expression "information" includes information of any nature or kind whatsoever capable of being stored in a database. Thus information includes, but is not limited to visual works (e.g. maps), audiovisual works (e.g. images, movies, sound records, presentations etc.), data (e.g. location data, weather data, traffic data, numerical data, etc.), text (e.g. opinions, comments, questions, messages, etc.), documents, spreadsheets, etc.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Further, as is discussed herein in other contexts, reference to a "first" element and a "second" element does not preclude the two elements from being the same actual real-world element.

Implementations of the present technology each have at least one of the above-mentioned object and/or aspects, but do not necessarily have all of them. It should be understood that some aspects of the present technology that have resulted from attempting to attain the above- mentioned object may not satisfy this object and/or may satisfy other objects not specifically recited herein.

Additional and/or alternative features, aspects and advantages of implementations of the present technology will become apparent from the following description, the accompanying drawings and the appended claims.

## BRIEF DESCRIPTION OF THE DRAWINGS

These and other features, aspects and advantages of the present technology will become better understood with regard to the following description, appended claims and accompanying drawings where:

Figure 1 depicts a schematic diagram of an example computer system configurable for implementing certain non-limiting embodiments of the present technology;

Figure 2 depicts a schematic diagram of a networked computing environment being suitable for use with certain non-limiting embodiments of the present technology;

Figure 3 depicts a schematic diagram of an example LiDAR system implemented in accordance with certain non-limiting embodiments of the present technology; and

Figure 4 depicts a flowchart of a method for controlling the LiDAR system of Figure 3 implemented in accordance with certain non-limiting embodiments of the present technology.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

## Computer System

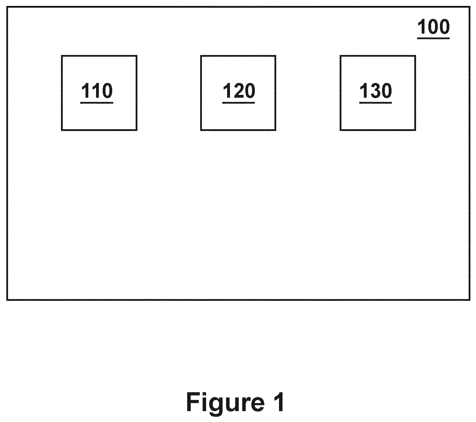

Referring initially to Figure 1, there is depicted a schematic diagram of a computer system 100 suitable for use with some implementations of the present technology. The computer system 100 includes various hardware components including one or more single or multi-core processors collectively represented by a processor 110, a solid-state drive 120, and a memory 130, which may be a random-access memory or any other type of memory.

Communication between the various components of the computer system 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled. According to embodiments of the present technology, the solid-state drive 120 stores program instructions suitable for being loaded into the memory 130 and executed by the processor 110 for determining a presence of an object. For example, the program instructions may be part of a vehicle control application executable by the processor 110. It is noted that the computer system 100 may have additional and/or optional components (not depicted), such as network communication modules, localization modules, and the like.

## Networked Computing Environment

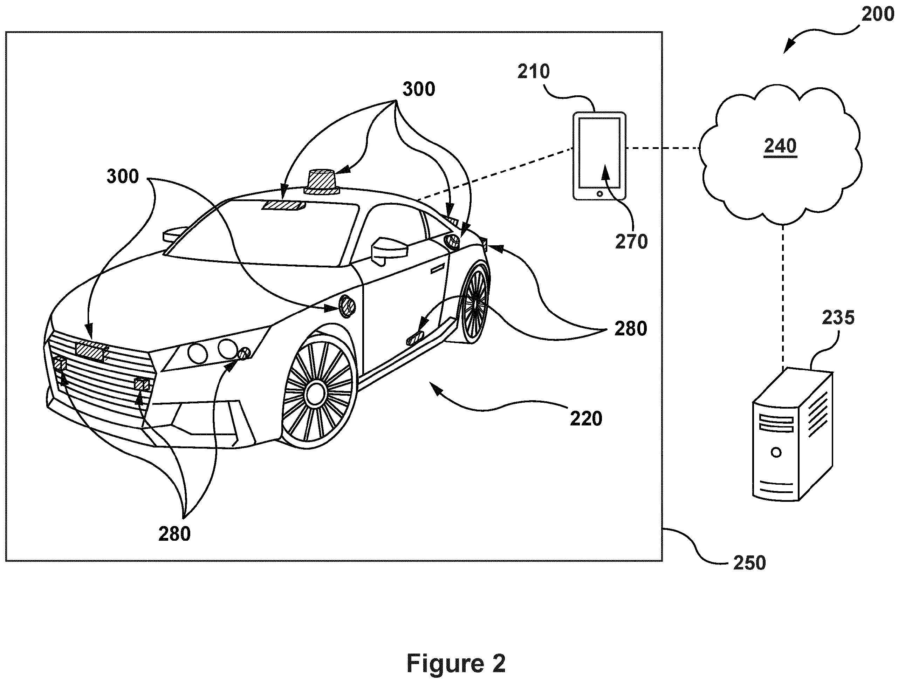

With reference to Figure 2, there is depicted a networked computing environment 200 suitable for use with some non-limiting embodiments of the present technology. The networked computing environment 200 includes an electronic device 210 associated with a vehicle 220 and/or associated with a user (not depicted) who is associated with the vehicle 220 (such as an operator of the vehicle 220). The networked computing environment 200 also includes a server 235 in communication with the electronic device 210 via a communication network 240 (e.g. the Internet or the like, as will be described in greater detail herein below).

**In** some non-limiting embodiments of the present technology, the networked computing environment 200 could include a GPS satellite (not depicted) transmitting and/or receiving a GPS signal to/from the electronic device 210. It will be understood that the present technology is not limited to GPS and may employ a positioning technology other than GPS. It should be noted that the GPS satellite can be omitted altogether.

The vehicle 220, to which the electronic device 210 is associated, could be any transportation vehicle, for leisure or otherwise, such as a private or commercial car, truck, motorbike or the like. Although the vehicle 220 is depicted as being a land vehicle, this may not be the case in each and every non-limiting embodiment of the present technology. For example, in certain non-limiting embodiments of the present technology, the vehicle 220 may be a watercraft, such as a boat, or an aircraft, such as a flying drone.

The vehicle 220 may be user operated or a driver-less vehicle. In some non-limiting embodiments of the present technology, it is contemplated that the vehicle 220 could be implemented as a Self-Driving Car (SDC). It should be noted that specific parameters of the vehicle 220 are not limiting, these specific parameters including for example: vehicle manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, and engine size.

According to the present technology, the implementation of the electronic device 210 is not particularly limited. For example, the electronic device 210 could be implemented as a vehicle engine control unit, a vehicle CPU, a vehicle navigation device (e.g. TomTom™, Garmin™), a tablet, a personal computer built into the vehicle 220, and the like. Thus, it should be noted that the electronic device 210 may or may not be permanently associated with the vehicle 220. Additionally or alternatively, the electronic device 210 could be implemented in a wireless communication device such as a mobile telephone (e.g. a smart-phone or a radio-phone). In certain embodiments, the electronic device 210 has a display 270.

The electronic device 210 could include some or all of the components of the computer system 100 depicted in Figure 1, depending on the particular embodiment. In certain embodiments, the electronic device 210 is an on-board computer device and includes the processor 110, the solid-state drive 120 and the memory 130. In other words, the electronic device 210 includes hardware and/or software and/or firmware, or a combination thereof, for processing data as will be described in greater detail below.

In some non-limiting embodiments of the present technology, the communication network 240 is the Internet. In alternative non-limiting embodiments of the present technology, the communication network 240 can be implemented as any suitable local area network (LAN), wide area network (WAN), a private communication network or the like. It should be expressly understood that implementations for the communication network 240 are for illustration purposes only. A communication link (not separately numbered) is provided between the electronic device 210 and the communication network 240, the implementation of which will depend, *inter alia,* on how the electronic device 210 is implemented. Merely as an example and not as a limitation, in those non-limiting embodiments of the present technology where the electronic device 210 is implemented as a wireless communication device such as a smartphone or a navigation device, the communication link can be implemented as a wireless communication link. Examples of wireless communication links may include, but are not limited to, a 3G communication network link, a 4G communication network link, and the like. The communication network 240 may also use a wireless connection with the server 235.

In some embodiments of the present technology, the server 235 is implemented as a computer server and could include some or all of the components of the computer system 100 of Figure 1. In one non-limiting example, the server 235 is implemented as a Dell™ PowerEdge™ Server running the Microsoft™ Windows Server™ operating system, but can also be implemented in any other suitable hardware, software, and/or firmware, or a combination thereof. In the depicted non-limiting embodiments of the present technology, the server 235 is a single server. In alternative non-limiting embodiments of the present technology, the functionality of the server 235 may be distributed and may be implemented via multiple servers (not shown).

In some non-limiting embodiments of the present technology, the processor 110 of the electronic device 210 could be in communication with the server 235 to receive one or more updates. Such updates could include, but are not limited to, software updates, map updates, routes updates, weather updates, and the like. In some non-limiting embodiments of the present technology, the processor 110 can also be configured to transmit to the server 235 certain operational data, such as routes travelled, traffic data, performance data, and the like. Some or all such data transmitted between the vehicle 220 and the server 235 may be encrypted and/or anonymized.

It should be noted that a variety of sensors and systems may be used by the electronic device 210 for gathering information about surroundings 250 of the vehicle 220. As seen in Figure 2, the vehicle 220 may be equipped with a plurality of sensor systems 280. It should be noted that different sensor systems from the plurality of sensor systems 280 may be used for gathering different types of data regarding the surroundings 250 of the vehicle 220.

In one example, the plurality of sensor systems 280 may include various optical systems including, *inter alia,* one or more camera-type sensor systems that are mounted to the vehicle 220 and communicatively coupled to the processor 110 of the electronic device 210. Broadly speaking, the one or more camera-type sensor systems may be configured to gather image data about various portions of the surroundings 250 of the vehicle 220. In some cases, the image data provided by the one or more camera-type sensor systems could be used by the electronic device 210 for performing object detection procedures. For example, the electronic device 210 could be configured to feed the image data provided by the one or more camera-type sensor systems to an Object Detection Neural Network (ODNN) that has been trained to localize and classify potential objects in the surroundings 250 of the vehicle 220.

In another example, the plurality of sensor systems 280 could include one or more radar-type sensor systems that are mounted to the vehicle 220 and communicatively coupled to the processor 110. Broadly speaking, the one or more radar-type sensor systems may be configured to make use of radio waves to gather data about various portions of the surroundings 250 of the vehicle 220. For example, the one or more radar-type sensor systems may be configured to gather radar data about potential objects in the surroundings 250 of the vehicle 220, such data potentially being representative of a distance of objects from the radar-type sensor system, orientation of objects, velocity and/or speed of objects, and the like.

It should be noted that the plurality of sensor systems 280 could include additional types of sensor systems to those non-exhaustively described above and without departing from the scope of the present technology.

### LiDAR System

According to the present technology and as is illustrated in Figure 2, the vehicle 220 is equipped with at least one Light Detection and Ranging (LiDAR) system, such as a LiDAR system 300, for gathering information about surroundings 250 of the vehicle 220. While only described herein in the context of being attached to the vehicle 220, it is also contemplated that the LiDAR system 300 could be a stand alone operation or connected to another system.

Depending on the embodiment, the vehicle 220 could include more or fewer LiDAR systems 300 than illustrated. Depending on the particular embodiment, choice of inclusion of particular ones of the plurality of sensor systems 280 could depend on the particular embodiment of the LiDAR system 300. The LiDAR system 300 could be mounted, or retrofitted, to the vehicle 220 in a variety of locations and/or in a variety of configurations.

For example, depending on the implementation of the vehicle 220 and the LiDAR system 300, the LiDAR system 300 could be mounted on an interior, upper portion of a windshield of the vehicle 220. Nevertheless, as illustrated in Figure 2, other locations for mounting the LiDAR system 300 are within the scope of the present disclosure, including on a back window, side windows, front hood, rooftop, front grill, front bumper or the side of the vehicle 220. In some cases, the LiDAR system 300 can even be mounted in a dedicated enclosure mounted on the top of the vehicle 220.

In some non-limiting embodiments, such as that of Figure 2, a given one of the plurality of LiDAR systems 300 is mounted to the rooftop of the vehicle 220 in a rotatable configuration. For example, the LiDAR system 300 mounted to the vehicle 220 in a rotatable configuration could include at least some components that are rotatable 360 degrees about an axis of rotation of the given LiDAR system 300. When mounted in rotatable configurations, the given LiDAR system 300 could gather data about most of the portions of the surroundings 250 of the vehicle 220.

In some non-limiting embodiments of the present technology, such as that of Figure 2, the LiDAR systems 300 is mounted to the side, or the front grill, for example, in a non-rotatable configuration. For example, the LiDAR system 300 mounted to the vehicle 220 in a non-rotatable configuration could include at least some components that are not rotatable 360 degrees and are configured to gather data about pre-determined portions of the surroundings 250 of the vehicle 220.

Irrespective of the specific location and/or the specific configuration of the LiDAR system 300, it is configured to capture data about the surroundings 250 of the vehicle 220 used, for example, for building a multi-dimensional map of objects in the surroundings 250 of the vehicle 220. Details relating to the configuration of the LiDAR systems 300 to capture the data about the surroundings 250 of the vehicle 220 will now be described.

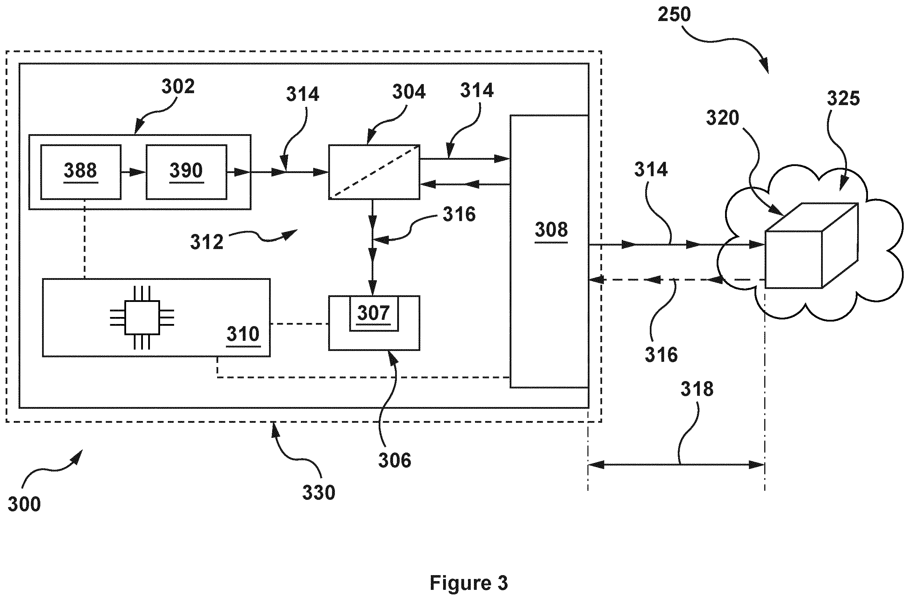

With reference to Figure 3, there is depicted a schematic diagram of one particular embodiment of the LiDAR system 300 implemented in accordance with certain non-limiting embodiments of the present technology.

Broadly speaking, the LiDAR system 300 includes a variety of internal components including, but not limited to: (i) a light source 302 (also referred to as a "radiation source"), (ii) a beam splitting element 304, (iii) a scanner unit 308 (also referred to as a "scanner assembly"), (iv) a receiving unit 306 (also referred to herein as a "detection system", "receiving assembly", or a "detector"), and (v) a controller 310. It is contemplated that in addition to the components non-exhaustively listed above, the LiDAR system 300 could include a variety of sensors (such as, for example, a temperature sensor, a moisture sensor, etc.) which are omitted from Figure 3 for sake of clarity.

In certain non-limiting embodiments of the present technology, one or more of the internal components of the LiDAR system 300 are disposed in a common housing 330 as depicted in Figure 3. In some embodiments of the present technology, the controller 310 could be located outside of the common housing 330 and communicatively connected to the components therein.

Generally speaking, the LiDAR system 300 operates as follows: the light source 302 of the LiDAR system 300 emits pulses of light, forming an output beam 314; the scanner unit 308 scans the output beam 314 across the surroundings 250 of the vehicle 220 for locating/capturing data of *a priori* unknown objects (such as an object 320) therein, for example, for generating a multi-dimensional map of the surroundings 250 where objects (including the object 320) are represented in a form of one or more data points. The light source 302 and the scanner unit 308 will be described in more detail below.

As certain non-limiting examples, the object 320 may include all or a portion of a person, vehicle, motorcycle, truck, train, bicycle, wheelchair, pushchair, pedestrian, animal, road sign, traffic light, lane marking, road-surface marking, parking space, pylon, guard rail, traffic barrier, pothole, railroad crossing, obstacle in or near a road, curb, stopped vehicle on or beside a road, utility pole, house, building, trash can, mailbox, tree, any other suitable object, or any suitable combination of all or part of two or more objects.

Further, let it be assumed that the object 320 is located at a distance 318 from the LiDAR system 300. Once the output beam 314 reaches the object 320, the object 320 generally reflects at least a portion of light from the output beam 314, and some of the reflected light beams may return back towards the LiDAR system 300, to be received in the form of an input beam 316. By reflecting, it is meant that at least a portion of light beam from the output beam 314 bounces off the object 320. A portion of the light beam from the output beam 314 may be absorbed or scattered by the object 320.

Accordingly, the input beam 316 is captured and detected by the LiDAR system 300 via the receiving unit 306. In response, the receiving unit 306 is then configured to generate one or more representative data signals. For example, the receiving unit 306 may generate an output electrical signal (not depicted) that is representative of the input beam 316. The receiving unit 306 may also provide the so-generated electrical signal to the controller 310 for further processing. Finally, by measuring a time between emitting the output beam 314 and receiving the input beam 316 the distance 318 to the object 320 is calculated by the controller 310.

As will be described in more detail below, the beam splitting element 304 is utilized for directing the output beam 314 from the light source 302 to the scanner unit 308 and for directing the input beam 316 from the scanner unit to the receiving unit 306.

Use and implementations of these components of the LiDAR system 300, in accordance with certain non-limiting embodiments of the present technology, will be described immediately below.

**Light Source**

The light source 302 is communicatively coupled to the controller 310 and is configured to emit light having a given operating wavelength. To that end, in certain non-limiting embodiments of the present technology, the light source 302 could include at least one laser preconfigured for operation at the given operating wavelength. The given operating wavelength of the light source 302 may be in the infrared, visible, and/or ultraviolet portions of the electromagnetic spectrum. For example, the light source 302 may include at least one laser with an operating wavelength between about 650 nm and 1150 nm. Alternatively, the light source 302 may include a laser diode configured to emit light at a wavelength between about 800 nm and about 1000 nm, between about 850 nm and about 950 nm, or between about 1300 nm and about 1600 nm.

The light source 302 of the LiDAR system 300 is generally an eye-safe laser, or put another way, the LiDAR system 300 may be classified as an eye-safe laser system or laser product. Broadly speaking, an eye-safe laser, laser system, or laser product may be a system with some or all of: an emission wavelength, average power, peak power, peak intensity, pulse energy, beam size, beam divergence, exposure time, or scanned output beam such that emitted light from this system presents little or no possibility of causing damage to a person's eyes.

According to certain non-limiting embodiments of the present technology, the operating wavelength of the light source 302 may lie within portions of the electromagnetic spectrum that correspond to light produced by the Sun. Therefore, in some cases, sunlight may act as background noise, which can obscure the light signal detected by the LiDAR system 300. This solar background noise can result in false-positive detections and/or may otherwise corrupt measurements of the LiDAR system 300.

According to the present technology, the light source 302 includes a pulsed laser 388 configured to produce, emit, or radiate pulses of light with a certain pulse duration. For example, in some non-limiting embodiments of the present technology, the light source 302 may be configured to emit pulses with a pulse duration (e.g., pulse width) ranging from 10 ps to 100 ns. In other non-limiting embodiments of the present technology, the light source 302 may be configured to emit pulses at a pulse repetition frequency of approximately 100 kHz to 5 MHz or a pulse period (e.g., a time between consecutive pulses) of approximately 200 ns to 10 μs. Overall, however, the light source 302 can generate the output beam 314 with any suitable average optical power, depending on specifics of the particular implementations.

In some non-limiting embodiments of the present technology, the light source 302 could include one or more laser diodes, including but not limited to: Fabry-Perot laser diode, a quantum well laser, a distributed Bragg reflector (DBR) laser, a distributed feedback (DFB) laser, or a vertical-cavity surface-emitting laser (VCSEL). Just as examples, a given laser diode operating in the light source 302 may be an aluminum-gallium-arsenide (AlGaAs) laser diode, an indium-gallium-arsenide (InGaAs) laser diode, or an indium-gallium-arsenide-phosphide (InGaAsP) laser diode, or any other suitable laser diode. It is also contemplated that the light source 302 may include one or more laser diodes that are current-modulated to produce optical pulses.

According to the present technology, the light source 302 of the LiDAR system 300 further includes an amplifier 390, specifically a doped fiber amplifier 390 in the illustrated example herein, also illustrated in Figure 3. In some non-limiting embodiments, the fiber amplifier 390 could be an erbium-doped fiber amplifier, which includes erbium ions in a fiber core section. The pulsed laser 388 is coupled to the fiber amplifier 390, such that light pulses emitted by the pulsed laser 388 are received and amplified by the fiber amplifier 390.

In some non-limiting embodiments of the present technology, the fiber amplifier 390 is a doped fiber amplifier 390, and in some cases an erbium doped fiber amplifier (EDFA) 390. For implementations or embodiments of the LiDAR system 300 implementing the EDFA 390, pulses emitted by the pulsed laser 388 are amplified by excited erbium ions in the fiber core of the EDFA 390. After the resulting laser beam pulse is emitted from the light source 302, some time is required to recharge the light source, also referred to as a recharge rate or a recharge frequency, in order to have a maximum amplification of the pulse. The recharge rate is determined by a population inversion rate of the doped fiber amplifier 390. As will be described in more detail below. when the pulse frequency (*i.e.* the rate at which the pulses are emitted) of the pulsed laser 388 is faster than the recharge (population inversion) rate, the pulses emitted from the light source 302 experience a power slump due to incomplete recharge of the EDFA/amplifier 390.

It should be noted that, according to the present technology, pulse length, the time during which the laser emits, will generally not be modified although this may not be the case for every embodiment. The present technology addresses control of the pulse frequency (also known as the pulse rate or emitting rate), which is determined based on the time between emission of pulses (1/time between pulses). According to at least some non-limiting embodiments of the present technology, the time between pulses can be in the range from 100 ns to 2 $\mu$s. It should also be noted that pulse frequency and pulse length are not necessarily correlated, beyond a limit that pulse length be necessarily less than the time between pulses in order for the light source 302 to form separated pulses.

In some non-limiting embodiments of the present technology, the light source 302 is generally configured to emit the output beam 314 as a collimated optical beam, but it is contemplated that the beam produced could have any suitable beam divergence for a given application. Broadly speaking, divergence of the output beam 314 is an angular measure of an increase in beam cross-section size (e.g., a beam radius or beam diameter) as the output beam 314 travels away from the light source 302 or the LiDAR system 300. In some non-limiting embodiments of the present technology, the output beam 314 may have a substantially circular cross-section.

It is also contemplated that the output beam 314 emitted by light source 302 could be unpolarized or randomly polarized, could have no specific or fixed polarization (e.g., the polarization may vary with time), or could have a particular polarization (e.g., the output beam 314 may be linearly polarized, elliptically polarized, or circularly polarized).

In at least some non-limiting embodiments of the present technology, the output beam 314 and the input beam 316 may be substantially coaxial. In other words, the output beam 314 and input beam 316 may at least partially overlap or share a common propagation axis, so that the input beam 316 and the output beam 314 travel along substantially the same optical path (albeit in opposite directions). Nevertheless, in other non-limiting embodiments of the present technology, the output beam 314 and the input beam 316 may not be coaxial, or in other words, may not overlap or share a common propagation axis inside the LiDAR system 300, without departing from the scope of the present technology.

It should be noted that in at least some non-limiting embodiments of the present technology, the light source 302 could be rotatable, such as by 360 degrees or less, about the axis of rotation (not depicted) of the LiDAR system 300 when the LiDAR system 300 is implemented in a rotatable configuration. However, in other embodiments, the light source 302 may be stationary even when the LiDAR system 300 is implemented in a rotatable configuration, without departing from the scope of the present technology.

**Beam Splitting Element**

With continued reference to Figure 3, there is further provided the beam splitting element 304 disposed in the housing 330. For example, as previously mentioned, the beam splitting element 304 is configured to direct the output beam 314 from the light source 302 towards the scanner unit 308. The beam splitting element 304 is also arranged and configured to direct the input beam 316 reflected off the object 320 to the receiving unit 306 for further processing thereof by the controller 310.

However, in accordance with other non-limiting embodiments of the present technology, the beam splitting element 304 may be configured to split the output beam 314 into at least two components of lesser intensity including a scanning beam (not separately depicted) used for scanning the surroundings 250 of the LiDAR system 300, and a reference beam (not separately depicted), which is further directed to the receiving unit 306.

In other words, in these embodiments, the beam splitting element 304 can be said to be configured to divide intensity (optical power) of the output beam 314 between the scanning beam and the reference beam. In some non-limiting embodiments of the present technology, the beam splitting element 304 may be configured to divide the intensity of the output beam 314 between the scanning beam and the reference beam equally. However, in other non-limiting embodiments of the present technology, the beam splitting element 304 may be configured to divide the intensity of the output beam 314 at any predetermined splitting ratio. For example, the beam splitting element 304 may be configured to use up to 80% of the intensity of the output beam 314 for forming the scanning beam, and the remainder of up to 20% of the intensity of the output beam 314 - for forming the reference beam. In yet other non-limited embodiments of the present technology, the beam splitting element 304 may be configured to vary the splitting ratio for forming the scanning beam (for example, from 1% to 95% of the intensity of the output beam 314).

It should further be noted that some portion (for example, up to 10%) of the intensity of the output beam 314 may be absorbed by a material of the beam splitting element 304, which depends on a particular configuration thereof.

Depending on the implementation of the LiDAR system 300, the beam splitting element 304 could be provided in a variety of forms, including but not limited to: a glass prism-based beam splitter component, a half-silver mirror-based beam splitter component, a dichroic mirror prism-based beam splitter component, a fiber-optic-based beam splitter component, and the like.

Thus, according to the non-limiting embodiments of the present technology, a non-exhaustive list of adjustable parameters associated with the beam splitting element 304, based on a specific application thereof, may include, for example, an operating wavelength range, which may vary from a finite number of wavelengths to a broader light spectrum (from 1200 to 1600 nm, as an example); an income incidence angle; polarizing/non-polarizing, and the like.

In a specific non-limiting example, the beam splitting element 304 can be implemented as a fiber-optic-based beam splitter component that may be of a type available from **OZ Optics Ltd.** of 219 Westbrook Rd Ottawa, Ontario K0A 1L0 Canada. It should be expressly understood that the beam splitting element 304 can be implemented in any other suitable equipment.

**Internal Beam Paths**

As is schematically depicted in Figure 3, the LiDAR system 300 forms a plurality of internal beam paths 312 along which the output beam 314 (generated by the light source 302) and the input beam 316 (received from the surroundings 250). Specifically, light propagates along the internal beam paths 312 as follows: the light from the light source 302 passes through the beam splitting element 304, to the scanner unit 308 and, in turn, the scanner unit 308 directs the output beam 314 outward towards the surroundings 250.

Similarly, the input beam 316 follows the plurality of internal beam paths 312 to the receiving unit 306. Specifically, the input beam 316 is directed by the scanner unit 308 into the LiDAR system 300 through the beam splitting element 304, toward the receiving unit 306. In some implementations, the LiDAR system 300 could be arranged with beam paths that direct the input beam 316 directly from the surroundings 250 to the receiving unit 306 (without the input beam 316 passing through the scanner unit 308).

It should be noted that, in various non-limiting embodiments of the present technology, the plurality of internal beam paths 312 may include a variety of optical components. For example, the LiDAR system 300 may include one or more optical components configured to condition, shape, filter, modify, steer, or direct the output beam 314 and/or the input beam 316. For example, the LiDAR system 300 may include one or more lenses, mirrors, filters (e.g., band pass or interference filters), optical fibers, circulators, beam splitters, polarizers, polarizing beam splitters, wave plates (e.g., half-wave or quarter-wave plates), diffractive elements, microelectromechanical (MEM) elements, collimating elements, or holographic elements.

It is contemplated that in at least some non-limiting embodiments of the present technology, the given internal beam path and the other internal beam path from the plurality of internal beam paths 312 may share at least some common optical components, however, this might not be the case in each and every embodiment of the present technology.

**Scanner Unit**

Generally speaking, the scanner unit 308 steers the output beam 314 in one or more directions downrange towards the surroundings 250. The scanner unit 308 is communicatively coupled to the controller 310. As such, the controller 310 is configured to control the scanner unit 308 so as to guide the output beam 314 in a desired direction downrange and/or along a predetermined scan pattern. Broadly speaking, in the context of the present specification "scan pattern" may refer to a pattern or path along which the output beam 314 is directed by the scanner unit 308 during operation.

In certain non-limiting embodiments of the present technology, the controller 310 is configured to cause the scanner unit 308 to scan the output beam 314 over a variety of horizontal angular ranges and/or vertical angular ranges; the total angular extent over which the scanner unit 308 scans the output beam 314 is referred to herein as the field of view (FoV). It is contemplated that the particular arrangement, orientation, and/or angular ranges could depend on the particular implementation of the LiDAR system 300. The field of view generally includes a plurality of regions of interest (ROIs), defined as portions of the FoV which may contain, for instance, objects of interest. In some implementations, the scanner unit 308 can be configured to further investigate a selected region of interest (ROI) 325. The ROI 325 of the LiDAR system 300 may refer to an area, a volume, a region, an angular range, and/or portion(s) of the surroundings 250 about which the LiDAR system 300 may be configured to scan and/or can capture data.

It should be noted that a location of the object 320 in the surroundings 250 of the vehicle 220 may be overlapped, encompassed, or enclosed at least partially within the ROI 325 of the LiDAR system 300.

It should be noted that, according to certain non-limiting embodiments of the present technology, the scanner unit 308 may be configured to scan the output beam 314 horizontally and/or vertically, and as such, the ROI 325 of the LiDAR system 300 may have a horizontal direction and a vertical direction. For example, the ROI 325 may be defined by 45 degrees in the horizontal direction, and by 45 degrees in the vertical direction. In some implementations, different scanning axes could have different orientations.

By the present technology, for scanning the output beam 314 over the ROI 325, the scanner unit 308 includes a pair of mirrors (not separately depicted), each one of which is independently coupled with a respective galvanometer (not separately depicted) providing control thereto. Accordingly, the controller 310 causes, via the respective galvanometers, rotation of each of the pair of mirrors about a respective one of mutually perpendicular axes associated therewith, thereby scanning the ROI 325 according to the predetermined scan pattern.

In certain non-limiting embodiments of the present technology, the scanner unit 308 may further include a variety of other optical components and/or mechanical-type components for performing the scanning of the output beam 314. For example, the scanner unit 308 may include one or more mirrors, prisms, lenses, MEM components, piezoelectric components, optical fibers, splitters, diffractive elements, collimating elements, and the like. It should be noted that the scanner unit 308 may also include one or more additional actuators (not separately depicted) driving at least some of the other optical components to rotate, tilt, pivot, or move in an angular manner about one or more axes, for example.

The LiDAR system 300 may thus make use of the predetermined scan pattern to generate a point cloud substantially covering the ROI 325 of the LiDAR system 300. As will be described in greater detail herein further below, this point cloud of the LiDAR system 300 may be used to render a multi-dimensional map of objects in the surroundings 250 of the vehicle 220.

As will become apparent from the description provided herein below, in certain non-limiting embodiments of the present technology, the predetermined scan pattern for scanning the ROI 325 may be associated with a respective scanning frequency.

Receiving Unit

According to certain non-limiting embodiments of the present technology, the receiving unit 306 is communicatively coupled to the controller 310 and may be implemented in a variety of ways. According to the present technology, the receiving unit 306 includes a sensor 307, such as a photodetector, but could include (but is not limited to) a photoreceiver, optical receiver, optical sensor, detector, optical detector, optical fibers, and the like. As mentioned above, in some non-limiting embodiments of the present technology, the receiving unit 306 may be configured to acquire or detects at least a portion of the input beam 316 and produces an electrical signal that corresponds to the input beam 316. For example, if the input beam 316 includes an optical pulse, the receiving unit 306 may produce an electrical current or voltage pulse that corresponds to the optical pulse detected by the receiving unit 306.

It is contemplated that, in various non-limiting embodiments of the present technology, the receiving unit 306 may be implemented with one or more avalanche photodiodes (APDs), one or more single-photon avalanche diodes (SPADs), one or more PN photodiodes (e.g., a photodiode structure formed by a p-type semiconductor and a n-type semiconductor), one or more PIN photodiodes (e.g., a photodiode structure formed by an undoped intrinsic semiconductor region located between p-type and n-type regions), and the like.

In some non-limiting embodiments, the receiving unit 306 may also include circuitry that performs signal amplification, sampling, filtering, signal conditioning, analog-to-digital conversion, time-to-digital conversion, pulse detection, threshold detection, rising-edge detection, falling-edge detection, and the like. For example, the receiving unit 306 may include electronic components configured to convert a received photocurrent (e.g., a current produced by an APD in response to a received optical signal) into a voltage signal. The receiving unit 306 may also include additional circuitry for producing an analog or digital output signal that corresponds to one or more characteristics (e.g., rising edge, falling edge, amplitude, duration, and the like) of a received optical pulse.

**Controller**

Depending on the implementation, the controller 310 may include one or more processors, an application-specific integrated circuit (ASIC), a field-programmable gate array (FPGA), and/or other suitable circuitry. The controller 310 may also include non-transitory computer-readable memory to store instructions executable by the controller 310 as well as data which the controller 310 may produce based on the signals acquired from other internal components of the LiDAR system 300 and/or may provide signals to the other internal components of the LiDAR system 300. The memory can include volatile (e.g., RAM) and/or non-volatile (e.g., flash memory, a hard disk) components. The controller 310 may be configured to generate data during operation and store it in the memory. For example, this data generated by the controller 310 may be indicative of the data points in the point cloud of the LiDAR system 300.

It is contemplated that, in at least some non-limiting embodiments of the present technology, the controller 310 could be implemented in a manner similar to that of implementing the electronic device 210 and/or the computer system 100, without departing from the scope of the present technology. In addition to collecting data from the receiving unit 306, the controller 310 could also be configured to provide control signals to, and potentially receive diagnostics data from, the light source 302 and the scanner unit 308.

As previously stated, the controller 310 is communicatively coupled to the light source 302, the scanner unit 308, and the receiving unit 306. In some non-limiting embodiments of the present technology, the controller 310 may be configured to receive electrical trigger pulses from the light source 302, where each electrical trigger pulse corresponds to the emission of an optical pulse by the light source 302. The controller 310 may further provide instructions, a control signal, and/or a trigger signal to the light source 302 indicating when the light source 302 is to produce optical pulses indicative, for example, of the output beam 314.

Just as an example, the controller 310 may be configured to send an electrical trigger signal that includes electrical pulses, so that the light source 302 emits an optical pulse, representable by the output beam 314, in response to each electrical pulse of the electrical trigger signal. It is also contemplated that the controller 310 may cause the light source 302 to adjust one or more characteristics of output beam 314 produced by the light source 302 such as, but not limited to: frequency, period, duration, pulse energy, peak power, average power, and wavelength of the optical pulses.

By the present technology, the controller 310 is configured to determine a "time-of-flight" value for an optical pulse in order to determine the distance between the LiDAR system 300 and one or more objects in the field of view, as will be described further below. The time of flight is based on timing information associated with (i) a first moment in time when a given optical pulse (for example, of the output beam 314) was emitted by the light source 302, and (ii) a second moment in time when a portion of the given optical pulse (for example, from the input beam 316) was detected or received by the receiving unit 306. In some non-limiting embodiments of the present technology, the first moment may be indicative of a moment in time when the controller 310 emits a respective electrical pulse associated with the given optical pulse; and the second moment in time may be indicative of a moment in time when the controller 310 receives, from the receiving unit 306, an electrical signal generated in response to receiving the portion of the given optical pulse from the input beam 316.

In other non-limiting embodiments of the present technology, where the beam splitting element 304 is configured to split the output beam 314 into the scanning beam (not depicted) and the reference beam (not depicted), the first moment in time may be a moment in time of receiving, from the receiving unit 306, a first electrical signal generated in response to receiving a portion of the reference beam. Accordingly, in these embodiments, the second moment in time may be determined as the moment in time of receiving, by the controller 310 from the receiving unit 306, a second electrical signal generated in response to receiving an other portion of the given optical pulse from the input beam 316.

By the present technology, the controller 310 is configured to determine, based on the first moment in time and the second moment in time, a time-of-flight value and/or a phase modulation value for the emitted pulse of the output beam 314. The time-of-light value T, in a sense, a "round-trip" time for the emitted pulse to travel from the LiDAR system 300 to the object 320 and back to the LiDAR system 300. The controller 310 is thus broadly configured to determine the distance 318 in accordance with the following equation:

$$D = \frac{c \cdot T}{2}, \tag{1}$$

wherein $D$ is the distance 318, $T$ is the time-of-flight value, and c is the speed of light (approximately $3.0 \times 10^8$ m/s).

As previously alluded to, the LiDAR system 300 may be used to determine the distance 318 to one or more other potential objects located in the surroundings 250. By scanning the output beam 314 across the ROI 325 of the LiDAR system 300 in accordance with the predetermined scan pattern, the controller 310 is configured to map distances (similar to the distance 318) to respective data points within the ROI 325 of the LiDAR system 300. As a result, the controller 310 is generally configured to render these data points captured in succession (e.g., the point cloud) in a form of a multi-dimensional map. In some implementations, data related to the determined time of flight and/or distances to objects could be rendered in different informational formats.

As an example, this multi-dimensional map may be used by the electronic device 210 for detecting, or otherwise identifying, objects or determining a shape or distance of potential objects within the ROI 325 of the LiDAR system 300. It is contemplated that the LiDAR system 300 may be configured to repeatedly/iteratively capture and/or generate point clouds at any suitable rate for a given application.

**Method for Controlling the System**

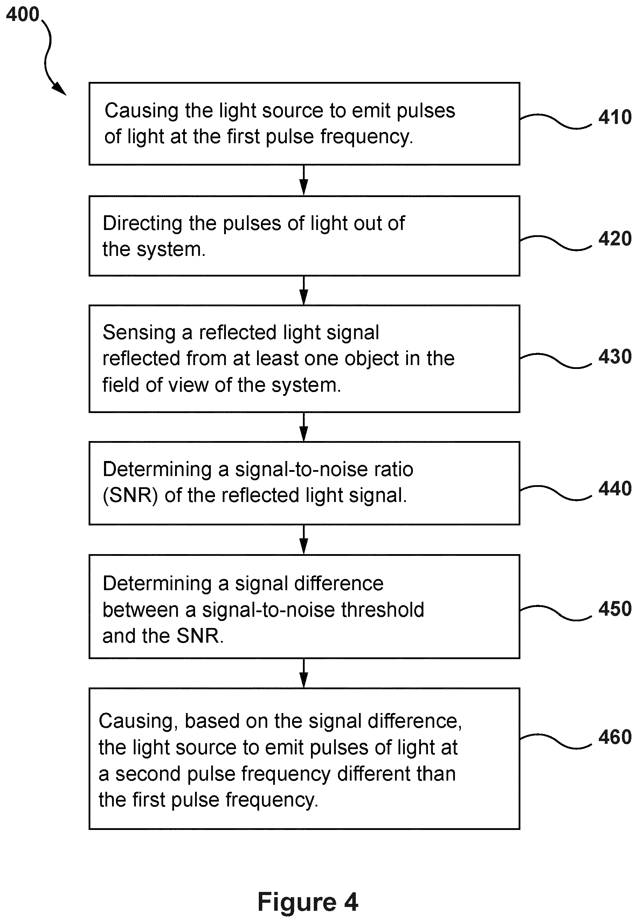

With reference to Figure 4, a flowchart of a method 400 for controlling the LiDAR system 300, the method 400 will now be described in more detail according to non-limiting embodiments of the present technology.

In some non-limiting embodiments of the present technology, the method 400 may be implemented by the controller 310 communicatively connected to the LiDAR system 300. As previously discussed that in at least some non-limiting embodiments of the present technology, the controller 310 may include one or more processors and may be implemented in a similar manner to the electronic device 210 and/or the computer system 100, without departing from the scope of the present technology. The method 400 begins at step 410.

**Step 410: causing a light source to emit pulses of light at a first pulse frequency**

At step 410, the controller 310 provides instructions, a control signal, and/or a trigger signal to the light source 302 indicating when the light source 302 is to emit pulses of light towards the scanner unit 308, at a first pulse frequency. As is mentioned briefly above, the pulse frequency is the rate or frequency at which pulses are emitted from the light source 302.

The first pulse frequency, when the method 400 begins, is generally uniform across the field of view and below (slower) than the recharge rate of the fiber amplifier 390. In this way, each sampling pulse has the full amplification desired or available from the fiber amplifier 390. In some non-limiting implementations, it is contemplated that portions of the field of view may be sampled at different rates for reasons outside the scope of the current technology. For simplicity of explanation, the method 400 is described herein with the assumption that no other methods of operation are simultaneously being used to control the LiDAR system 300, although it is contemplated that the present method 400 could be run in addition to and/or concurrently with other methods of operation.

In one or more steps associated with the method 400, the controller 310 may be configured to cause the light source 302 to begin to emit the output beam 314 towards the scanner unit 308 in certain conditions. Such conditions may include but are not limited to: upon operating the vehicle 220 in self-driving mode, when the vehicle 220 is in motion irrespective of the driving mode, when the vehicle 220 is stationary, when the vehicle 220 is initially turned on, or based on a manual operation performed by a user (not depicted) operating the vehicle 220 etc.

**Step 420: directing the pulses of light out of the system**

At step 420, the controller 310 provides instructions, a control signal, and/or a trigger signal to the cause the scanner unit 308 to direct the pulses of light, of the output beam 314, out from the LiDAR system 300. Depending on the specific implementation, pulses are scanned over portions or the entirety of the field of view of the LiDAR system 300 to create 3D maps of the surroundings falling within the field of view.

**Step 430: sensing a reflected light signal reflected from at least one object in the field of view of the system**

At step 430, reflected light from the field of view of the LiDAR system 300 is sensed by the sensor 307 of the receiving unit 306. The controller 310 then receives a signal and/or information corresponding to one or more reflected light signals, sensed by the sensor 307. As is described above, the input beam 316 enters the LiDAR system 300 from the field of view and is directed by components of the LiDAR system 300 to the sensor 307 and the receiving unit 306.

In at least some non-limiting embodiments of the present technology, the sensing at step 430 could include sensing a plurality of reflected light signals reflected from one or more regions of interest of the field of view.

**Step 440: determining a signal-to-noise ratio (SNR) of the reflected light signal**

At step 440, the controller 310 determines, or calculates, a signal-to-noise ratio of the reflected signal received by the sensor 307 of the receiving unit 306. The signal-to-noise ratio (SNR) is calculated by dividing a determined signal power by a background noise power level. Depending on the embodiment, the background noise level can be determined in various ways. According to one non-limiting embodiment, the background noise level can be determined by sensing or measuring a signal magnitude from the sensor 307 when there is no input beam 316 reaching the sensor 307. In at least some non-limiting embodiments, the background noise level can be determined by including a shutter in front of the sensor 307 for periodically blocking the input beam 316, and measuring the "signal" at the sensor 307 when the shutter is blocking the input beam 316. Depending on the implementation, the background noise level could be determined sporadically or at a regular frequency.

In at least some non-limiting embodiments of the present technology, the controller 310 could determine the SNR of a portion of the reflected signal received by the sensor 307 corresponding to a region of interest (ROI) within the field of view. Depending on the embodiment or implementation, individual SNR values for one or more ROIs could be determined by the controller 310, either simultaneously and/or sequentially. For instance, different SNR values for different portions of the field of view could be determined for a signal scan. In another non-limiting example, the controller 310 could determine the SNR of different portions of the field of view in different scans of the field of view.

### Step 450: determining a signal difference between a signal-to-noise threshold and the SNR

At step 450, the controller 310 determines a signal difference between a signal-to-noise threshold and the SNR. Having determined the SNR at step 440, the controller then compares the determined SNR to a signal-to-noise threshold in order to determine the relative strength of the signal of the input beam 316. In at least some non-limiting embodiments, determining the signal difference could include determining a magnitude and sign of a difference between the SNR and the threshold. In at least some non-limiting embodiments, could include determining if the SNR is greater than the threshold.

In at least some non-limiting embodiments, generally speaking, the signal-to-noise threshold is a minimum acceptable value of the SNR, below which noise begins to affect signal quality. In at least some non-limiting embodiments, the signal-to-noise threshold could be a minimum good signal value, at some values below such the SNR may still be sufficient for good data collection. In at least some non-limiting embodiments of the present technology, the signal-to-noise threshold is a pre-determined value stored to the controller 310, although it may also be stored to the electronic device 210 and/or the computer system 100 without departing from the scope of the present technology. It is also contemplated that the threshold could be calculated by the controller 310 (or the electronic device 210 and/or the computer system 100), depending on variables of the LiDAR system 300, including but not limited to environmental and/or weather-related condition, environmental lighting levels, external illumination, required ranging capability (required current radiation range), current speed, and road conditions.

### Step 460: causing, based on the signal difference, the light source to emit pulses of light at a second pulse frequency different than the first pulse frequency

At step 460, the controller 310 causes, based on the signal difference determined at step 450, the light source 302 to emit pulses of light at a second pulse frequency different than the first pulse frequency.

In at least some non-limiting embodiments of the present technology, the controller 310 could direct the light source 302 to change the pulse frequency of the output beam 314 in response to any non-zero difference between the threshold and the SNR determined at step 450. In at least some other non-limiting embodiments, the controller 310 could direct the light source 302 to change the pulse frequency of the output beam 314 when the difference between the threshold and the determined SNR is above a minimum difference value. As one non-limiting example, the light source 302 could change pulse frequency when the determined SNR is at least double the threshold SNR value.

In one or more non-limiting steps associated with the method 400, the controller 310 may determine that the SNR is greater than the signal-to-noise threshold. In such a case, the pulse frequency of the light source 302 could be increased such that the second pulse frequency is greater (faster) than the first pulse frequency. In at least some non-limiting embodiments of the present technology, the second pulse frequency could be greater than the recharge rate of the light source 302, specifically the recharge rate of the fiber amplifier 390. As is mentioned briefly above, the power of the output beam 314 is generally reduced ("power slump") in cases where the pulse frequency of the output beam 314 is greater than the recharge rate of the amplifier 390. By determining that the SNR is greater than the threshold in step 450, however, the SNR has been determined to be sufficiently high such that power reduction of the output beam 314 should still result in a sufficient signal-to-noise ratio to produce the desired 3D map. In other words, the pulse rate of the output beam 314 can thus be increased to produce a more detailed 3D map, while maintaining at least a minimum signal-to-noise ratio. In this way, spatial detail (determined by the pulse rate) can be improved for all or portions of the field of view having sufficiently good signal quality to tolerate some reduction (without sacrificing a minimum signal quality).

In at least some non-limiting embodiments of the present technology, the method 400 further includes determining a second SNR while the light source 302 is producing the output beam 314 at the second pulse frequency, subsequent to previous SNR measurements. Methods of determining the second SNR could be the same or different than the specific ones used for determining the initial SNR, depending on the specific implementation.

In at least some such non-limiting embodiments, the method 400 could further include determining, by the controller 310, that the second SNR is less than the signal-to-noise threshold. The controller 310 could then cause the light source 302 to emit pulses of light at a third pulse frequency, different than the second pulse frequency. As one non-limiting example, the third pulse frequency could be less than the second pulse frequency, such that the amplifier 390 would have a longer amount of time to allow greater recharging of the amplifier 390 to increase the power of the output beam 314, to aid in returning the signal-to-noise ratio to a desired level. In some cases, the third pulse frequency is equal to the first pulse frequency, such that the output beam 314 is produced with the same pulse frequency as it did initially. In some other non-limiting embodiments, it is contemplated that the third pulse frequency could be greater than or less than the first frequency, depending on various factors in the LiDAR system 300 or the particular implementation.

In at least some non-limiting embodiments of the present technology, determining the SNR of the reflected light signal at step 440 includes determining one or more subzone signal-to-noise ratios (subzone SNRs) by the controller 310. The subzone SNR corresponds to a signal-to-noise ratio of a portion of the reflected signal coming from a given ROI within the field of view of the LiDAR system 300. In such an embodiment, the method 400 could include, at step 450, determining the difference between the signal-to-noise threshold and one or more of the subzone SNRs. In at least some such non-limiting embodiments, the controller 310 could determine that a given subzone SNR is greater than the signal-to-noise threshold and cause the light source 302 to emit pulses of light at the second pulse frequency when scanning a given region of interest, for which the given subzone SNR was determined. In some cases, the controller 310 could determine that a plurality of subzone SNRs are greater than the threshold and cause the light source 302 to emit pulses of light at the second pulse frequency when scanning corresponding regions of interest. In at least some such non-limiting embodiments, it is also contemplated that the controller 310 could cause the light source 302 to emit pulses of light at different pulse frequencies when scanning different regions of interest, depending on the difference between each subzone SNR and the threshold.

In at least some non-limiting embodiments of the present technology, the method 400 could further include the controller 310 causing the light source 302 to return the pulse frequency to the first pulse frequency for one or more regions of interest, one or more subzones, and/or the entire field of view after a given period of time. In at least some non-limiting embodiments of the present technology, the method 400 could further include the light source 302 being caused to return to the first pulse frequency upon determination of decreased quality of the 3D map, according to methods outside the scope of the present technology.

It should be apparent to those skilled in the art that at least some embodiments of the present technology aim to expand a range of technical solutions for addressing a particular technical problem, namely improving spatial detail of a LiDAR system while limiting effects of signal quality.

While the above-described implementations have been described and shown with reference to particular steps performed in a particular order, it will be understood that some of these steps may be combined, sub-divided, or re-ordered without departing from the teachings of the present technology. Accordingly, the order and grouping of the steps is not a limitation of the present technology.

**Claims**

1. A method (400) for controlling an optical system, comprising:

   causing, by a controller (310), a light source (302) composed of a laser source (388) coupled to a fiber amplifier (390) to emit pulses of light at a first pulse frequency;
   directing, by a scanner unit (308) communicatively connected to the controller (310), the pulses of light out from the optical system;
   sensing, by at least one sensor communicatively connected with the controller (310), a reflected light signal reflected from at least one object (320) in a field of view of the optical system;
   determining, by the controller (310), a signal-to-noise ratio of the reflected light signal;
   determining, by the controller (310), a signal difference between a signal-to-noise threshold and the signal-to-noise ratio, the signal-to-noise ratio being greater than the signal-to-noise threshold; and
   causing, by the controller (310), based on the signal difference, the light source (302) to emit pulses of light at a second pulse frequency different than the first pulse frequency, the second pulse frequency being greater than the first pulse frequency, the second pulse frequency being greater than a recharge rate of the light source (302) determined by a population inversion rate of the fiber amplifier (390).

2. The method (400) of claim 1, wherein the signal-to-noise ratio is a first signal-to-noise ratio; and the method further comprises:

   determining, by the controller (310) subsequent to causing the light source (302) to emit pulses of light at the second pulse frequency, a second signal-to-noise ratio;
   determining, by the controller (310), that the second signal-to-noise ratio is less than the signal-to-noise threshold; and
   causing, by the controller (310), the light source (302) to emit pulses of light at a third pulse frequency different than the second pulse frequency.

3. The method (400) of claim 2, wherein the third pulse frequency is equal to the first pulse frequency.

4. The method (400) of any one of claims 1-3, wherein:

determining the signal-to-noise ratio of the reflected light signal comprises:
determining a subzone signal-to-noise ratio by the controller (310), the subzone signal-to-noise ratio corresponding to a signal-to-noise ratio of a portion of the reflected signal coming from a region of interest within the field of view;
determining the difference between the signal-to-noise threshold and the signal-to-noise ratio comprises:
determining, by the controller (310), that the subzone signal-to-noise ratio is greater than the signal-to-noise threshold; and
causing the light source (302) to emit pulses of light at the second pulse frequency comprises:
causing, by the controller (310), based on the subzone signal-to-noise ratio being greater than the signal-to-noise threshold, the light source (302) to emit pulses of light at the second pulse frequency when scanning the region of interest.

5. The method (400) of claim 4, wherein:

determining the subzone signal-to-noise ratio comprises determining, by the controller (310), a plurality of subzone signal-to-noise ratios for a plurality of regions of interest;
determining that the subzone signal-to-noise ratio is greater than the signal-to-noise threshold comprises determining that at least one subzone SNR of the plurality of subzone signal-to-noise ratios is greater than the signal-to-noise threshold, the at least one subzone signal-to-noise ratio corresponding to signals received from a given region of interest of the plurality of regions of interest; and

in response to the at least one signal-to-noise ratio being greater than the signal-to-noise threshold, causing, by the controller (310), the light source (302) to emit pulses of light at the second pulse frequency when scanning the given region of interest.

6. The method (400) of claim 1, wherein: for a given region of interest, the controlling comprises:

determining, by the controller (310), a given signal-to-noise ratio of the reflected light signal of the given region of interest;
determining, by the controller (310), a difference between the signal-to-noise threshold and the given signal-to-noise ratio; and
causing, by the controller (31), based on the signal difference, the light source (302) to emit pulses of light at the second pulse frequency different than the first pulse frequency when scanning the given region of interest.

7. A LIDAR system (300) comprising:

a light source (302) composed of a laser source (388) coupled to a fiber amplifier (309);
a scanner unit (308) configured to direct light pulses from the light source (302) outward;
a sensing unit configured to sense light signals reflected from surrounding objects, the receiving unit including at least one sensor; and
a controller (310) communicatively connected with at least the scanner unit (308) and the sensing unit, the controller (310) being configured to execute instructions stored thereto, the instructions comprising:

causing, by the controller (310), the light source (302) to emit pulses of light at a first pulse frequency;
directing, by the scanner unit (308) communicatively connected to the controller (310), the pulses of light out from the optical system;
sensing, by at least one sensor communicatively connected with the controller (310), a reflected light signal reflected from at least one object (320) in a field of view of the optical system;
determining, by the controller (310), a signal-to-noise ratio of the reflected light signal;
determining, by the controller (310), a signal difference between a signal-to-noise threshold and the signal-to-noise ratio; and

causing, by the controller (310), based on the signal difference, the light source (302) to emit pulses of light at a second pulse frequency different than the first pulse frequency, the second pulse frequency being greater than the first pulse frequency, the second pulse frequency being greater than a recharge rate of the light source (302) determined by a population inversion rate of the fiber amplifier (390).

8. The system (300) of claim 7, wherein the light source (302) is a laser communicatively connected to the controller (310); and the fiber amplifier (390) is a doped fiber amplifier.

**Patentansprüche**

1. Verfahren (400) zum Steuern eines optischen Systems, umfassend:

   Veranlassen, durch eine Steuerung (310), dass eine Lichtquelle (302), bestehend aus einer mit einem Faserverstärker (390) gekoppelten Laserquelle (388), Lichtimpulse mit einer ersten Impulsfrequenz emittiert;
   Richten, durch eine mit der Steuerung (310) kommunikativ verbundenen Scannereinheit (308), der Lichtimpulse aus dem optischen System;
   Erfassen, durch mindestens einen kommunikativ mit der Steuerung (310) verbundenen Sensor, eines reflektierten Lichtsignals, das von mindestens einem Objekt (320) in einem Sichtfeld des optischen Systems reflektiert wird;
   Bestimmen, durch die Steuerung (310), eines Signal-Rausch-Verhältnisses des reflektierten Lichtsignals,
   Bestimmen, durch die Steuerung (310), einer Signaldifferenz zwischen einem Signal-Rausch-Schwellenwert und dem Signal-Rausch-Verhältnis, wobei das Signal-Rausch-Verhältnis größer als der Signal-Rausch-Schwellenwert ist; und
   Veranlassen, durch die Steuerung (310), basierend auf der Signaldifferenz, dass die Lichtquelle (302) Lichtimpulse mit einer zweiten Impulsfrequenz, die sich von der ersten Impulsfrequenz unterscheidet, emittiert, wobei die zweite Impulsfrequenz höher als die erste Impulsfrequenz ist, wobei die zweite Impulsfrequenz größer ist als eine Wiederaufladerate der Lichtquelle (302) bestimmt durch die Besetzungsinversionrate des Faserverstärkers (390).

2. Verfahren (400) nach Anspruch 1, wobei das Signal-Rausch-Verhältnis ein erstes Signal-Rausch-Verhältnis ist; und das Verfahren ferner Folgendes umfasst:

   Bestimmen, durch die Steuerung (310), nach dem Veranlassen, dass die Lichtquelle (302) Lichtimpulse mit der zweiten Impulsfrequenz emittiert, ein zweites Signal-Rausch-Verhältnis;
   Bestimmen, durch die Steuerung (310), dass das zweite Signal-Rausch-Verhältnis kleiner als der Signal-Rausch-Schwellenwert ist; und
   Veranlassen, durch die Steuerung (310), dass die Lichtquelle (302) Lichtimpulse mit einer dritten Impulsfrequenz emittiert, die sich von der zweiten Impulsfrequenz unterscheidet.

3. Verfahren (400) nach Anspruch 2, wobei die dritte Impulsfrequenz gleich der ersten Impulsfrequenz ist.

4. Verfahren (400) nach einem der Ansprüche 1-3, wobei:

   Bestimmen des Signal-Rausch-Verhältnisses des reflektierten Lichtsignals umfasst:
   das Bestimmen eines Signal-Rausch-Verhältnisses einer Unterzone durch die Steuerung (310), wobei das Signal-Rausch-Verhältnis der Unterzone einem Signal-Rausch-Verhältnis eines Teils des reflektierten Signals entspricht, das von einem Bereich von Interesse innerhalb des Sichtfelds kommt;
   Bestimmen der Differenz zwischen dem Signal-Rausch-Schwellenwert und dem Signal-Rausch-Verhältnis umfasst:
   das Bestimmen, durch die Steuerung (310), dass das Signal-Rausch-Verhältnis der Unterzone größer als der Signal-Rausch-Schwellenwert ist; und
   Veranlassen, dass die Lichtquelle (302) Lichtimpulse mit der zweiten Impulsfrequenz emittiert, umfasst:
   das Veranlassen, durch die Steuerung (310), basierend auf dem Signal-Rausch-Verhältnis der Unterzone, das größer als der Signal-Rausch-Schwellenwert ist, dass die Lichtquelle (302) beim Abtasten des Bereichs von Interesse Lichtimpulse bei der zweiten Impulsfrequenz emittiert.

5. Verfahren (400) nach Anspruch 4, wobei:

   das Bestimmen des Signal-Rausch-Verhältnisses umfasst Bestimmen, durch die Steuerung (310), einer Vielzahl von Signal-Rausch-Verhältnissen der Unterzone für eine Vielzahl von Bereichen von Interesse;
   das Bestimmen, dass das Signal-Rausch-Verhältnis der Unterzone größer als der Signal-Rausch-Schwellenwert ist, umfasst Bestimmen, dass mindestens ein Signal-Rausch-Verhältnis der Unterzone der Vielzahl von Signal-Rausch-Verhältnissen der Unterzone größer als der Signal-Rausch-Schwellenwert ist, wobei das mindestens ein Signal-Rausch-Verhältnis der Unterzone den Signalen entspricht, die von einem gegebenen Bereich von Interesse der Vielzahl von Bereichen von Interesse empfangen werden; und

als Reaktion darauf, dass das mindestens ein Signal-Rausch-Verhältnis größer als der Signal-Rausch-Schwellenwert ist, Veranlassen, durch die Steuerung (310), dass die Lichtquelle (302) Lichtimpulse bei der zweiten Impulsfrequenz emittiert, wenn der gegebene Bereich von Interesse abgetastet wird.

6. Verfahren (400) nach Anspruch 1, wobei: für einen gegebenen Bereich von Interesse das Steuern umfasst:

Bestimmen, durch die Steuerung (310), eines gegebenen Signal-Rausch-Verhältnisses des reflektierten Lichtsignals des gegebenen Bereichs von Interesse;
Bestimmen, durch die Steuerung (310), einer Differenz zwischen dem Signal-Rausch-Schwellenwert und dem gegebenen Signal-Rausch-Verhältnis; und
Veranlassen, durch die Steuerung (310), basierend auf der Signaldifferenz, dass die Lichtquelle (302) beim Abtasten des gegebenen Bereichs von Interesse Lichtimpulse bei der zweiten Impulsfrequenz, die sich von der ersten Impulsfrequenz unterscheidet, emittiert.

7. LIDAR-System (300), umfassend:

eine Lichtquelle (302), bestehend aus einer mit einem Faserverstärker (309) gekoppelten Laserquelle (388);
eine Scannereinheit (308), die dazu ausgelegt ist, Lichtimpulse von der Lichtquelle (302) nach außen zu richten;
eine Erfassungseinheit, die dazu ausgelegt ist, die von umgebenden Objekten reflektierten Lichtsignale zu erfassen, wobei die Empfangseinheit mindestens einen Sensor umfasst; und
eine Steuerung (310), die kommunikativ mit mindestens der Scannereinheit (308) und der Erfassungseinheit verbunden ist,
wobei die Steuerung (310) dazu ausgelegt ist, darauf gespeicherte Anweisungen auszuführen,
wobei die Anweisungen Folgendes umfassen:

Veranlassen, durch die Steuerung (310), dass die Lichtquelle (302) Lichtimpulse mit einer ersten Impulsfrequenz emittiert;
Richten, durch die mit der Steuerung (310) kommunikativ verbundenen Scannereinheit (308), der Lichtimpulse aus dem optischen System;
Erfassen, durch mindestens einen kommunikativ mit der Steuerung (310) verbundenen Sensor, eines reflektierten Lichtsignals, das von mindestens einem Objekt (320) in einem Sichtfeld des optischen Systems reflektiert wird;
Bestimmen, durch die Steuerung (310), eines Signal-Rausch-Verhältnisses des reflektierten Lichtsignals,
Bestimmen, durch die Steuerung (310), einer Signaldifferenz zwischen einem Signal-Rausch-Schwellenwert und dem Signal-Rausch-Verhältnis; und

Veranlassen, durch die Steuerung (310), basierend auf der Signaldifferenz, dass die Lichtquelle (302) Lichtimpulse mit einer zweiten Impulsfrequenz, die sich von der ersten Impulsfrequenz unterscheidet, emittiert, wobei die zweite Impulsfrequenz höher als die erste Impulsfrequenz ist, wobei die zweite Impulsfrequenz größer ist als eine Wiederaufladerate der Lichtquelle (302) bestimmt durch die Besetzungsinversionrate des Faserverstärkers (390).

8. System (300) nach Anspruch 7, wobei die Lichtquelle (302) ein mit der Steuerung (310) kommunikativ verbundener Laser ist; und der Faserverstärker (390) ein dotierter Faserverstärker ist.

**Revendications**

1. Procédé (400) de commande d'un système optique, comprenant :

le fait d'amener, par un contrôleur (310), une source de lumière (302) consistant en une source laser (388) couplée à un amplificateur à fibre (390), à émettre des impulsions de lumière à une première fréquence d'impulsion ;
le fait de diriger, par une unité de balayage (308) connectée en communication au contrôleur (310), les impulsions de lumière hors du système optique ;

la détection, par au moins un capteur connecté en communication au contrôleur (310), d'un signal lumineux réfléchi par au moins un objet (320) dans un champ de vision du système optique ;

la détermination, par le contrôleur (310), d'un rapport signal sur bruit du signal lumineux réfléchi ;

la détermination, par le contrôleur (310), d'une différence de signal entre un seuil de signal sur bruit et le rapport signal sur bruit, le rapport signal sur bruit étant supérieur au seuil de signal sur bruit ; et

le fait d'amener, par le contrôleur (310), sur la base de la différence de signal, la source de lumière (302) à émettre des impulsions de lumière à une deuxième fréquence d'impulsion différente de la première fréquence d'impulsion, la deuxième fréquence d'impulsion étant supérieure à un taux de recharge de la source de lumière (302) déterminé par un taux d'inversion de population de l'amplificateur à fibre (390).

2. Procédé (400) selon la revendication 1, dans lequel le rapport signal sur bruit est un premier rapport signal sur bruit ; et le procédé comprend en outre :

la détermination, par le contrôleur (310) après avoir amené la source de lumière (302) à émettre des impulsions de lumière à la deuxième fréquence d'impulsion, d'un deuxième signal sur bruit ;

la détermination, par le contrôleur (310), du fait que le deuxième rapport signal sur bruit est inférieur au seuil de signal sur bruit ; et

le fait d'amener, par le contrôleur (310), la source de lumière (302) à émettre des impulsions de lumière à une troisième fréquence d'impulsion différente de la deuxième fréquence d'impulsion.

3. Procédé (400) selon la revendication 2, dans lequel la troisième fréquence d'impulsion est égale à la première fréquence d'impulsion.

4. Procédé (400) selon l'une quelconque des revendications 1 à 3, dans lequel :

la détermination du rapport signal sur bruit du signal lumineux réfléchi comprend ;

la détermination d'un rapport signal sur bruit d'une sous-zone par le contrôleur (310), le rapport signal sur bruit de la sous-zone correspondant à un rapport signal sur bruit d'une partie du signal réfléchi provenant d'une région d'intérêt dans le champ de vision ;

la détermination de la différence entre le seuil de signal sur bruit et le rapport de signal sur bruit comprend :

la détermination, par le contrôleur (310), du fait que le rapport signal sur bruit de la sous-zone est supérieur au seuil de signal sur bruit ; et

le fait d'amener la source de lumière (302) à émettre des impulsions de lumière à la deuxième fréquence d'impulsion comprend :

le fait d'amener, par le contrôleur (310), sur la base du fait que le rapport signal sur bruit de la sous-zone est supérieur au seuil de signal sur bruit, la source de lumière (302) à émettre des impulsions de lumière à la deuxième fréquence d'impulsion lors du balayage de la région d'intérêt.

5. Procédé (400) selon la revendication 4, dans lequel :

la détermination du rapport signal sur bruit de la sous-zone comprend la détermination, par le contrôleur (310), d'une pluralité de rapports signal sur bruit de la sous-zone pour une pluralité de régions d'intérêt ;

la détermination du fait que le rapport signal sur bruit de la sous-zone est supérieur au seuil de signal sur bruit comprend la détermination du fait qu'au moins un rapport signal sur bruit de la sous-zone de la pluralité de rapports signal sur bruit de la sous-zone est supérieur au seuil de signal sur bruit, l'au moins un rapport signal sur bruit de la sous-zone correspondant à des signaux reçus d'une région d'intérêt donnée de la pluralité de régions d'intérêt ; et

en réponse au fait que l'au moins un rapport signal sur bruit est supérieur au seuil de signal sur bruit, le fait d'amener, par le contrôleur (310), la source de lumière (302) à émettre des impulsions de lumière à la deuxième fréquence d'impulsion lors du balayage de la région d'intérêt donnée.

6. Procédé (400) selon la revendication 1, dans lequel : pour une région d'intérêt donnée, la commande comprend :

la détermination, par le contrôleur (310), d'un rapport signal sur bruit donné du signal lumineux réfléchi de la région d'intérêt donnée ;

la détermination, par le contrôleur (310), d'une différence entre le seuil de signal sur bruit et le rapport signal sur bruit donné ; et

le fait d'amener, par le contrôleur (310), sur la base de la différence de signal, la source de lumière (302) à émettre des impulsions de lumière à la deuxième fréquence d'impulsion différente de la première fréquence d'impulsion lors du balayage de la région d'intérêt donnée.

7. Système LIDAR (300) comprenant :

une source de lumière (302) consistant en une source laser (388) couplée à un amplificateur à fibre (309) ;
une unité de balayage (308) configurée pour diriger des impulsions de lumière depuis la source de lumière (302) vers l'extérieur ;
une unité de détection configurée pour détecter des signaux lumineux réfléchis par des objets environnants, l'unité de réception comprenant au moins un capteur ; et
un contrôleur (310) connecté en communication à au moins l'unité de balayage (308) et l'unité de détection, le contrôleur (310) étant configuré pour exécuter des instructions stockées sur celui-ci, les instructions comprenant :

le fait d'amener, par le contrôleur (310), la source de lumière (302) à émettre des impulsions de lumière à une première fréquence d'impulsion ;
le fait de diriger, par l'unité de balayage (308) connectée en communication au contrôleur (310), les impulsions de lumière hors du système optique ;
la détection, par au moins un capteur connecté en communication au contrôleur (310), d'un signal lumineux réfléchi par au moins un objet (320) dans un champ de vision du système optique ;
la détermination, par le contrôleur (310), d'un rapport signal sur bruit du signal lumineux réfléchi ;
la détermination, par le contrôleur (310), d'une différence de signal entre le seuil de signal sur bruit et le rapport signal sur bruit ; et

le fait d'amener, par le contrôleur (310), sur la base de la différence de signal, la source de lumière (302) à émettre des impulsions de lumière à une deuxième fréquence d'impulsion différente de la première fréquence d'impulsion, la deuxième fréquence d'impulsion étant supérieure à la première fréquence d'impulsion, la deuxième fréquence d'impulsion étant supérieure à un taux de recharge de la source de lumière (302) déterminé par un taux d'inversion de population de l'amplificateur à fibre (390).

8. Système (300) selon la revendication 7, dans lequel la source de lumière (302) est un laser connecté en communication au contrôleur (310) ; et l'amplificateur à fibre (390) est un amplificateur à fibre dopée.

**Figure 1**

Figure 2

Figure 3

400

Causing the light source to emit pulses of light at the first pulse frequency.    410

Directing the pulses of light out of the system.    420

Sensing a reflected light signal reflected from at least one object in the field of view of the system.    430

Determining a signal-to-noise ratio (SNR) of the reflected light signal.    440

Determining a signal difference between a signal-to-noise threshold and the SNR.    450

Causing, based on the signal difference, the light source to emit pulses of light at a second pulse frequency different than the first pulse frequency.    460

Figure 4

**EP 3 988 963 B1**

**Patent documents cited in the description**

- US 20160274589 A1
- US 20200319304 A1
- US 20170269197 A1